# DEMANDE DE BREVET EUROPEEN

(11) **EP 0 740 136 A1**
(43) Date de publication de la demande: **30.10.1996**
(21) Numéro de dépôt: 96400870.0
(22) Date de dépôt: 24.04.1996
(51) Int. Cl.: G01K 11/06

(54) **Dispositif contrôleur de froid du type réversible destiné aux appareils électroménagers et état de marche**

(30) Priorité: 27.04.1995 FR 9505193
(71) Demandeur: SOCIETE COOL S.a.r.l., F-07800 La Voulte sur Rhône (FR)
(72) Inventeur: Toporenko, Yves, 75011 Paris (FR); Berrebi, Georges, 26270 Cliousclat (FR)
(74) Mandataire: Andreeff, François

(57) **Abrégé**

La présente invention concerne un dispositif contrôleur de froid destiné aux produits alimentaires surgelés ou réfrigérés.

Son principe de fonctionnement repose sur la solidification et la fusion d'éléments témoins disposés à l'intérieur d'une enceinte transparente en matière plastique, ou en verre. Son mécanisme est armé par la congélation qui masque certains éléments d'observation, qui réapparaissent lors d'une décongélation. Ce système réversible est destiné aux appareils électroménagers non équipés d'indicateurs de rupture de la chaîne du froid, ainsi qu'aux meubles de type étal réfrigéré par exemple utilisés sur les marchés.

## Description

La présente invention concerne un dispositif qui permet de reconnaître par un simple examen visuel si un produit froid et surtout surgelé est propre ou non à la consommation.

Les surgelés sont des produits sûrs fabriqués avec une extrême rigueur présentant des intérêts incontestables sur le plan microbiologique (au-dessous de - 18 °C, les microbes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne du froid, car on n'est pas sans ignorer qu'entre le moment où le produit est surgelé et le moment où il est consommé la chaîne du froid peut être rompue en de nombreuses occasions.

En effet, à - 18 °C, on stoppe la multiplication des microbes, des levures, et des moisissures. Plus tard à la décongélation, les micro-organismes reprennent une vie intense. Entre le transport des marchandises, des livraisons, la vente et les manipulations de la ménagère, la moindre négligence peut être fatale. De récentes enquêtes au niveau des commerces et des restaurants ont prouvé que la chaîne du froid est rompue dans 30 % des cas (porte d'une armoire réfrigérée mal fermée pendant tout un week-end ou interruption d'électricité, etc.). En dehors de l'examen des boîtes ou des paquets proposés sur le marché des consommateurs, cet examen n'étant d'ailleurs pas fiable, on trouve le brevet français relatif aux produits surgelés FR-A-2626072 de Monsieur TOPORENKO proposant un moyen simple et rapide de contrôle de la chaîne du froid, qui consiste à utiliser un petit glaçon de forme géométrique, coloré dans sa masse, fluorescent de surcroît, moulé sur un support, ou maintenu entre des index, le tout étant intégré à l'intérieur d'une minuscule boîte hermétique transparente qui accompagne l'emballage du produit surgelé d'une façon inviolable. La présente invention concerne de nouvelles réalisations pratiques perfectionnées de l'art antérieur en utilisant un mélange liquide apte à contrôler des températures de l'ordre de + 5 °C à - 30 °C. Le dispositif selon l'invention prend en compte non seulement la variation de température, mais également sa durée. Il peut être utilisé pour le froid négatif et le froid positif. Ce dispositif simple et peu coûteux, a l'avantage d'avoir un fonctionnement fiable et irréversible.

La présente invention concerne un dispositif contrôleur de froid destiné aux produits alimentaires surgelés ou réfrigérés.

Son principe de fonctionnement repose sur la solidification et la fusion d'éléments témoins disposés à l'intérieur d'une enceinte transparente en matière plastique, ou en verre. Son mécanisme est armé par la congélation qui masque certains éléments d'observation, qui réapparaissent lors d'une décongélation. Ce système réversible est destiné aux appareils électroménagers non équipés d'indicateurs de rupture de la chaîne du froid, ainsi qu'aux meubles de type étal réfrigéré par exemple utilisés sur les marchés.

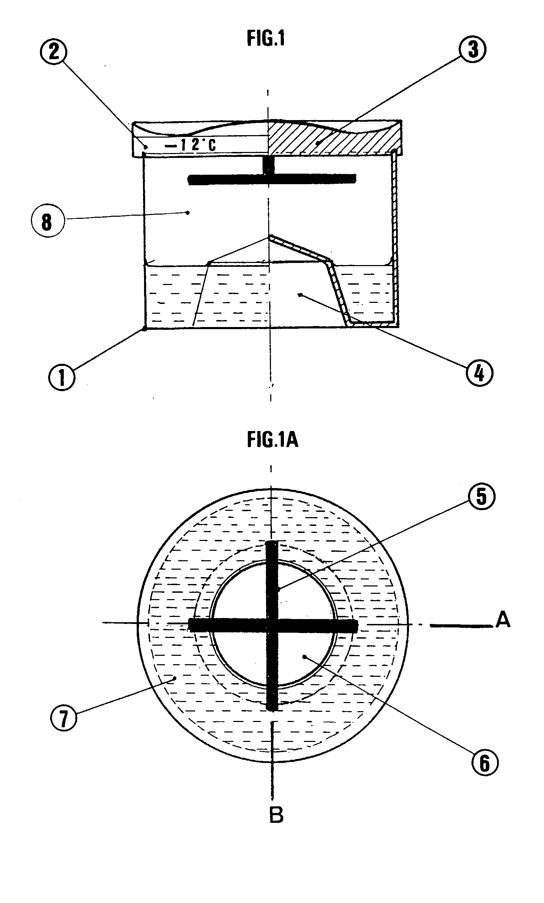

La figure 1 représente la conception d'un indicateur d'état de conservation pour produits congelés ou réfrigérés, il est constitué d'au moins un étui cylindrique 1 (donc généralement de forme symétrique), muni de son bouchon d'obturation 2, l'ensemble étant réalisé en matière plastique transparente, ou en verre, ou matériau équivalent, de manière à résister aux contraintes mécaniques internes ou externes. L'étui 1 possède dans sa partie interne une protubérance interne surmontée d'un dôme conique : ou plus simplement d'une partie hémisphérique 6 présentant une cavité extérieure 4.

Le bouchon d'obturation 2 reçoit une croix ou croisillon 5 dans sa partie interne. A la place d'une croix ou croisillon, on pourrait utiliser un disque perforé ou non, une sphère, un cylindre, etc... Cette croix ou croisillon 5 est constitué par des axes en matière plastique colorée ; ceux-ci peuvent être remplacés par un disque en matière plastique coloré qui vient s'encliqueter sous le couvercle ou bouchon 2.

Le bouchon d'obturation 2 peut être moulé de manière à produire un effet de loupe 3 pour un observateur placé au-dessus de l'indicateur.

La réalisation de l'indicateur consiste à remplir partiellement la cavité interne 7 de l'étui 1 de liquide eutectique coloré d'une solution alcoolique, d'une paraffine, d'une graisse (ou toute autre substance équivalente) à point de congélation ou de goutte connu.

La partie 8 de l'étui 1 peut recevoir un gaz neutre ou un autre liquide non miscible avec le liquide 7 dont la superposition sera très visible à travers la paroi de l'étui 1.

La cavité 4 est adaptée à recevoir un axe support (ou une source lumineuse).

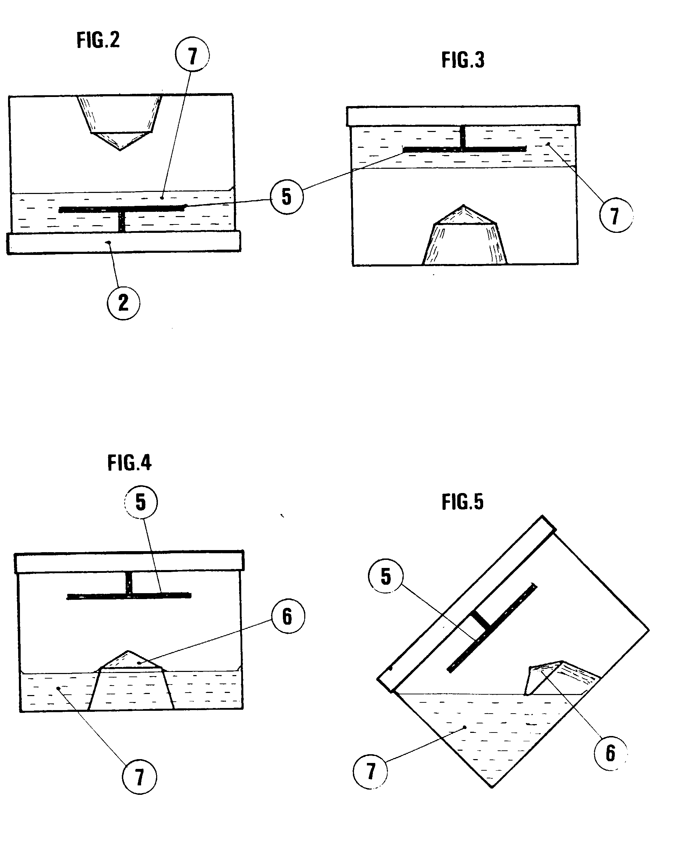

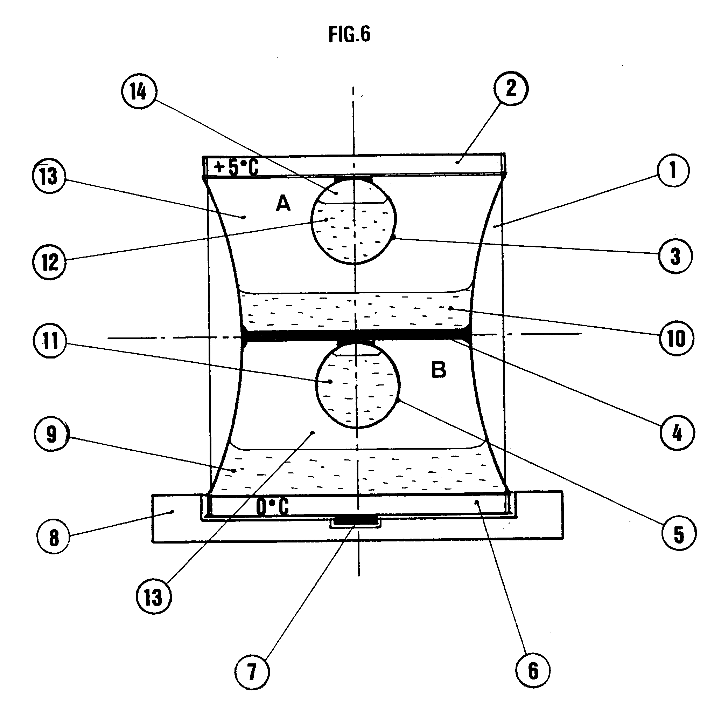

Les figures 2, 3, 4 représentent un cycle de fonctionnement en 3 temps de l'appareil décrit précédemment et la figure 5 la position inclinée de l'appareil lors d'une décongélation.

La figure 2 représente le 1er temps qui consiste à armer le dispositif. On retourne l'appareil de manière à le faire reposer sur son couvercle 2 de façon que la matière colorée 7 à l'état liquide vienne submerger et masquer la croix 5 ou tout autre organe de préhension disposé sous la face inteme du couvercle 2. L'appareil ainsi disposé est placé dans une ambiance de congélation ou de réfrigération afin de solidifier la masse liquide 7.

La figure 3 représente le 2ème temps qui consiste à retourner l'appareil, à le faire reposer sur sa base et à le placer en état de veille dans une ambiance de conservation où se trouvent disposés un produit ou groupe de produits de même nature pour lesquels une température est à respecter. L'ambiance de conservation étant respectée on constate que la croix 5 est emprisonnée et masquée par la masse congelée, le dôme 6 apparaît dans sa totalité.

La figure 4 représente le 3ème temps, le dispositif placé selon la description précédente accuse une modification de la température ambiante de l'enceinte de conservation où il se trouve placé, on constate que la matière 7 s'est liquéfiée et garnit la partie intérieure basse du dispositif ne laissant apparaître que le dôme 6 et la mise en évidence de la croix ou croisillon 5 à l'intérieur du dispositif.

La figure 5 représente le dispositif en position inclinée lors d'une décongélation ou rupture de la chaîne du froid.

Ainsi, l'invention concerne ici un dispositif contrôleur de niveau de température caractérisé par l'utilisation d'au moins un étui réservoir en matière plastique transparente réagissant à une température prédéterminée de référence provoquant la fusion d'un volume solidifié de liquide eutectique ou paraffinique mis en suspension à l'intérieur de l'étui ; cette fusion mettant en évidence un dispositif de préhension disposé sur la face interne du bouchon de l'étui.

Le dispositif/contrôleur de niveau de température est avantageusement caractérisé par son fonctionnement en tout ou rien, lié à la présence ou à la disparition par liquéfaction d'un volume eutectique ou paraffinique solidifié mis en suspension dans une cavité et avantageusement également caractérisé par l'utilisation d'au moins un étui en matière plastique transparente dont la partie interne du couvercle reçoit par clipsage un organe d'observation qui sert à la fois au maintien du volume de liquide eutectique ou paraffinique solidifié ; cet organe d'observation fixé au couvercle de l'étui dans sa partie interne, étant une croix, un croisillon, un disque perforé ou non, une sphère, un cylindre, plein ou creux, compressibles pour ces derniers lorsque la cavité interne de ces volumes est en partie remplie de liquide eutectique agissant en accumulateurs de frigories vis-à-vis des liquides marqueurs du système. De préférence une autre caractéristique de l'invention est une disposition en partie basse de la cavité interne de l'étui, d'une protubérance constituée par un dôme hémisphérique ou tout autre volume géométrique qui se masque en partie ou totalement lors d'une élévation de la température provoquant la liquéfaction des volumes solidifiés mis en suspension à la partie supérieure de l'étui.

La figure 6 qui est un perfectionnement du dispositif précédent représente un appareil à double effet mettant à profit le système décrit précédemment afin de constituer une plage de température à partir de la décongélation de produits possédant des grades de température "liquidus solidus" différents.

L'appareil de la figure 6 est constitué d'au moins un étui 1 de forme symétrique et par exemple ici de forme cylindrique extérieurement en matière plastique transparente ou en verre dont la partie interne revêt une forme hyperbolique dans laquelle on a disposé une cloison étanche 4 dans son axe transversal de façon à obtenir deux compartiments A et B.

L'étui 1 reçoit un couvercle 2 à sa partie supérieure. Le couvercle 2 est muni dans sa partie interne d'une sphère 3 ou d'un cylindre souple et étanche de faibles dimensions ; de même l'étui 1 reçoit un couvercle 6 sur sa base, ce dernier étant muni d'un détrompeur 7 constitué par une pastille magnétique de forme circulaire ou rectangulaire destinée à être positionnée dans une alvéole prévue dans une base support 8 réalisée spécialement pour l'appareil afin de le placer dans l'ambiance à surveiller. La cloison 4 reçoit un dispositif témoin 5 analogue à celui 3 défini ci-dessus et fixé sous le couvercle 2.

On emprisonne de part et d'autre de la cloison 4 à l'intérieur de l'étui 1 des produits 9 et 10 à l'état liquide dont les températures de figement ou de solidification sont connues. Les cavités A et B peuvent recevoir un gaz neutre vis-à-vis des produits liquides 9 et 10. Ces mêmes cavités A et B peuvent éventuellement recevoir un liquide non miscible et de densité différente avec respectivement les liquides 9 et 10 ce qui permet d'étendre les capacités de l'appareil. Les sphères ou cylindres 3 et 5 peuvent recevoir dans une partie de leur cavité interne des liquides eutectiques dans le but de constituer des accumulateurs de frigories qui seront ajustés de manière à compenser les déperditions de parois de l'étui 1 dans le cas où celles-ci seraient disproportionnées par rapport aux emballages ou de l'enceinte de conservation où sont disposés ces produits.

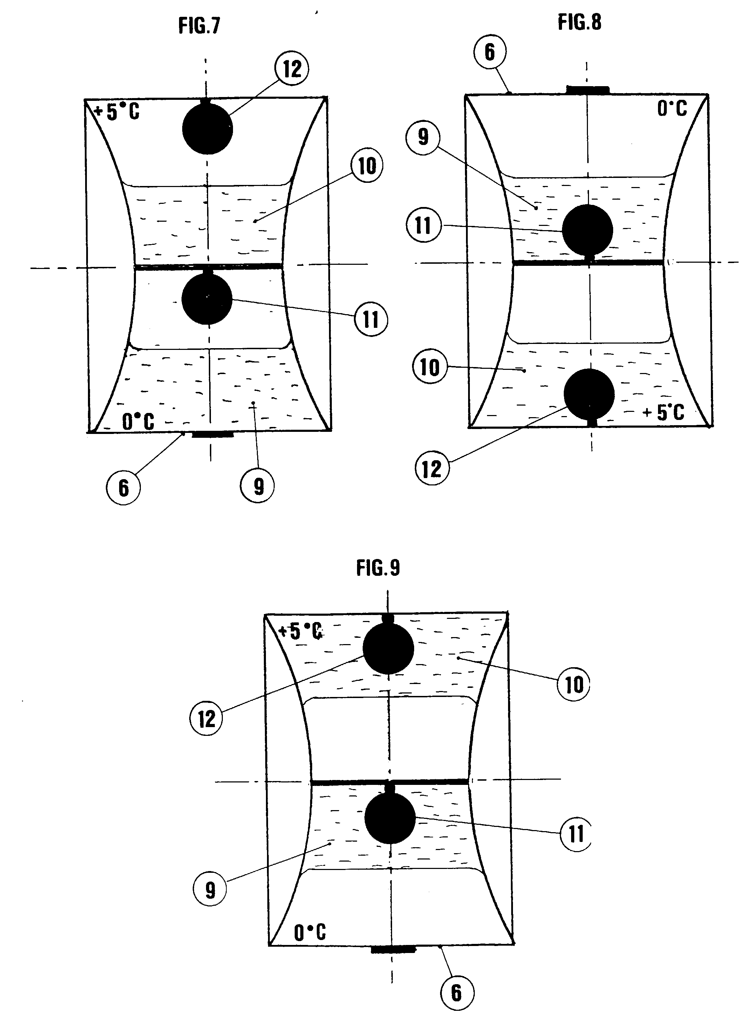

Les figures 7, 8, 9 représentent un cycle de fonctionnement de l'appareil (décrit à la figure 6) en trois temps.

La figure 7 représente un appareil au repos disposé sur sa base 6, les matières 9 et 10 sont à l'état liquide : ce qui correspond à une phase de décongélation ainsi apparaissent les sphères 11 et 12.

La figure 8 correspond au processus de la mise en état de fonctionnement de l'appareil. On retourne l'appareil de 180 °C de façon à la faire reposer sur son couvercle. Les matières colorées 9 et 10 submergent les sphères ou cylindres 11 et 12 et les masquent.
L'appareil ainsi disposé est placé dans une ambiance de congélation ou de réfrigération afin de solidifier les masses liquides 9 et 10 ; lorsque ces solidifications sont réalisées, l'appareil est prêt à fonctionner et adopter la position de veille.

La figure 9 représente l'appareil en état de veille dans une enceinte prédéterminée où l'on désire surveiller l'ambiance de conservation. On retourne de 180 °C l'appareil représenté par la figure 8, c'est-à-dire qu'on le fait reposer sur sa base 6. Les sphères ou organes de suspension 11 et 12 sont masqués par les volumes congelés 9 et 10 et le restent ainsi tant que la température ambiante de l'enceinte est respectée. Une rupture de la chaîne du froid conduit à la situation de la figure 7.

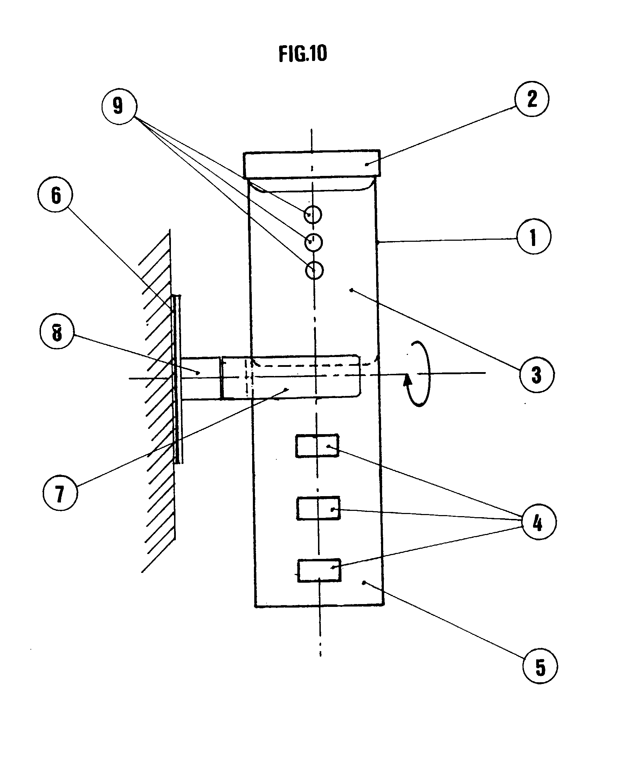

La figure 10 représente une autre forme du dispositif qui comprend un boîtier étanche 1 de forme cylindrique en matière plastique transparente ou en verre, muni de son bouchon d'obturation 2. La partie extérieure du boîtier reçoit lors de sa conception un film opaque dans lequel on a disposé des fenêtres d'observation 4 et 9. Le bouchon d'obturation 2 peut être remplacé par un bouchon de cire (ou holt melt).

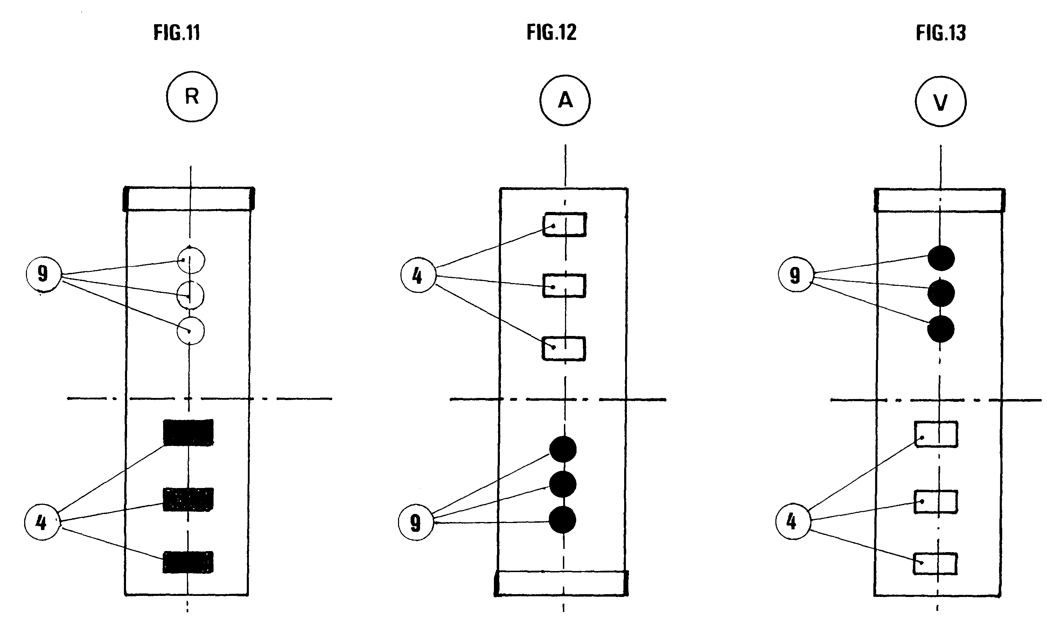

On introduit à l'intérieur de cet étui cylindrique au moins deux liquides colorés non miscibles entre eux, de densité et de points de gélification ou de congélation différents. Dans le cas présent on a choisi 2 liquides constitués par de l'eau distillée colorée, 5 et une paraffine 3 incolore dont le point de gélification est ≥ à 8 °C (cette paraffine peut être remplacée par une huile, une graisse végétale ou minérale dont on connaît le point de goutte (valeurs supérieures à 0 °C). Les figures 11, 12 et 13 représentent un cycle complet de fonctionnement.

Figure 11 : L'appareil placé sur sa base (fond de l'étui) est au repos à une température ambiante supérieure au premier point de congélation ou de gélification qui caractérise l'un ou les deux liquides associés. Dans le cas des deux liquides qui remplissent l'étui défini précédemment les fenêtres circulaires 9 placées à la partie supérieure du cylindre sont incolores (ces demières étant placées en regard de la paraffine). Les fenêtres rectangulaires apparaissent colorées (position de l'eau) à la base du cylindre.

Figure 12 : L'armement du dispositif se fait par retournement du cylindre et en le faisant reposer sur son couvercle ou bouchon dans une enceinte de congélation ou une ambiance de refroidissement suffisante pour solidifier les liquides, on constate que les fenêtres circulaires 9 se sont obscurcies, les fenêtres rectangulaires sont devenues incolores. Ces dernières dispositions se maintiennent lorsque le système est armé.

Figure 13 : L'effet d'armement étant constaté, on retourne à nouveau le cylindre de 180 °C de manière à le disposer sur sa base dans l'enceinte à surveiller.
Si la température de l'enceinte est inférieure au point de liquéfaction de l'eau, la position des liquides reste figée lors d'une remontée en température, on constate en 9 la liquéfaction de l'eau, puis progressivement une inversion des liquides à l'intérieur du cylindre par une coloration progressive des fenêtres rectangulaires en allant de la base vers le haut du cylindre.

La limite de remontée en température est atteinte lorsque toutes les fenêtres rectangulaires 4 sont colorées alors que les fenêtres circulaires 9 sont devenues incolores.

Pour faciliter le déroulement du cycle d'armement et de mise en veille du dispositif, celui-ci est placé sur un support 6 pourvu d'une crapaudine 8 et d'une bride demi-ouverte 7 prolongée d'un tourillon ensemble qui permet de faire pivoter l'étui de 180 °C.

Les figures 6 à 13 illustrent donc un dispositif/contrôleur de niveau de température (voir figure 6) caractérisé par la réalisation d'un étui dont le profil interne peut être réalisé sous une forme hyperbolique, ou parabolique facilitant l'accrochage, le maintien, la mise en suspension d'un volume liquide aqueux ou huileux solidifié, le contrôleur de niveau de température étant caractérisé de préférence par la réalisation d'au moins une cloison dans l'axe de symétrie transversal d'un cylindre permettant d'obtenir deux indicateurs dont le fonctionnement correspond aux grades de température des liquides aqueux ou huileux qui se trouvent emprisonnés à l'intérieur des cavités ainsi obtenues.

De préférence encore, le dispositif/contrôleur de niveau de température est caractérisé (voir figure 10) par l'utilisation d'au moins une cavité cylindrique de préférence dans laquelle on emprisonne deux liquides de grades de température différents, non miscibles entre eux, de densités différentes, dont un au moins est coloré.

Ici, le contrôleur de niveau de température est caractérisé (comme d'ailleurs pour les figures 6-9) par l'armement du dispositif qui nécessite le retournement de l'étui avant sa mise en congélation provoquant l'inversion des volumes liquides aqueux ou huileux avant solidification.

Avantageusement, le contrôleur de niveau de température est caractérisé par sa mise en état de veille par retournement de l'étui après que les volumes liquide aqueux ou huileux ont été solidifiés et dont la fusion par réchauffement provoque l'inversion des volumes liquides aqueux ou huileux non miscibles à l'intérieur de l'étui, phénomène visible à travers des fenêtres disposées sur la face extérieure de l'étui.

En outre, le dispositif peut être caractérisé par le fait que l'organe de suspension fixé au couvercle dans sa partie interne de l'étui sert à maintenir le volume liquide aqueux ou huileux à la partie supérieure de l'appareil et évite à celui-ci de glisser vers le bas dans le cas d'un réchauffement brutal des parois qui n'affecte en rien la température de conservation dans son ensemble.

D'une façon générale, les dispositifs selon l'invention sont caractérisés par l'utilisation de liquides eutectiques ou alcoolisés, huileux ou paraffinique de densités différentes non miscibles entre eux.

## Revendications

1. Dispositif contrôleur de niveau de température caractérisé par l'utilisation d'au moins un étui réservoir en matière plastique transparente réagissant à une température prédéterminée de référence provoquant la fusion d'un volume solidifié de liquide eutectique ou paraffinique mis en suspension à l'intérieur de l'étui ; cette fusion mettant en évidence un dispositif de préhension disposé sur la face interne du bouchon de l'étui.

2. Dispositif/contrôleur de niveau de température selon la revendication 1 caractérisé par son fonctionnement en tout ou rien, lié à la présence ou à la disparition par liquéfaction d'un volume eutectique ou paraffinique solidifié mis en suspension dans une cavité.

3. Dispositif/contrôleur de niveau de température selon l'une des revendications 1 et 2 caractérisé par l'utilisation d'au moins un étui en matière plastique transparente dont la partie interne du couvercle reçoit par clipsage un organe d'observation qui sert à la fois au maintien du volume de liquide eutectique ou paraffinique solidifié ; cet organe d'observation fixé au couvercle de l'étui dans sa partie interne, étant une croix, un croisillon, un disque perforé ou non, une sphère, un cylindre, plein ou creux, compressibles pour ces derniers lorsque la cavité interne de ces volumes est en partie remplie de liquide eutectique agissant en accumulateurs de frigories vis-à-vis des liquides marqueurs du système.

4. Dispositif/contrôleur de niveau de température selon l'une des revendications 1 à 3 caractérisé par la disposition en partie basse de la cavité interne de l'étui, d'une protubérance constituée par un dôme hémisphérique qui se masque en partie ou totalement lors d'une élévation de la température provoquant la liquéfaction des volumes solidifiés mis en suspension à la partie supérieure de l'étui.

5. Dispositif/contrôleur de niveau de température selon la revendication 1 caractérisé par la réalisation (voir figure 6) d'au moins un étui dont le profil interne peut être réalisé sous une forme hyperbolique, ou parabolique facilitant l'accrochage, le maintien, la mise en suspension d'un volume liquide aqueux ou huileux solidifié.

6. Dispositif/contrôleur de niveau de température selon la revendication 5 caractérisé par la réalisation d'au moins une cloison dans l'axe de symétrie transversal d'un cylindre permettant d'obtenir deux indicateurs dont le fonctionnement correspond aux grades de température des liquides aqueux ou huileux qui se trouvent emprisonnés à l'intérieur des cavités ainsi obtenues.

7. Dispositif/contrôleur de niveau de température caractérisé par l'utilisation d'au moins une cavité cylindrique de préférence dans laquelle on emprisonne deux liquides de grades de température différents, non miscibles entre eux, de densités différentes, dont un au moins est coloré.

8. Dispositif/contrôleur de niveau de température selon l'une des revendications 1 à 7 caractérisé par l'armement du dispositif qui nécessite le retournement de l'étui avant sa mise en congélation provoquant l'inversion des volumes liquides aqueux ou huileux avant solidification.

9. Dispositif/contrôleur de niveau de température selon la revendication 8 caractérisé par sa mise en état de veille par retournement de l'étui après que les volumes liquide aqueux ou huileux ont été solidifiés et dont la fusion par réchauffement provoque l'inversion des volumes liquides aqueux ou huileux non miscibles à l'intérieur de l'étui, phénomène visible à travers des fenêtres disposées sur la face extérieure de l'étui.

10. Dispositif/contrôleur de niveau selon l'une des revendications 1 à 9 caractérisé par le fait que l'organe de suspension fixé au couvercle dans sa partie interne de l'étui sert à maintenir le volume liquide aqueux ou huileux à la partie supérieure de l'appareil et évite à celui-ci de glisser vers le bas dans le cas d'un réchauffement brutal des parois qui n'affecte en rien la température de conservation dans son ensemble.

11. Utilisation de liquides eutectiques ou alcoolisés, huileux ou paraffinique de densités différentes non miscibles entre eux, pour la mise en oeuvre d'un dispositif/contrôleur de niveau selon l'une des revendications 1 à 10.

12. Indicateur d'état de conservation selon l'une des revendications 1 à 4 (voir figure 1) pour produits congelés ou réfrigérés constitué d'au moins un étui cylindrique 1, muni de son bouchon d'obturation 2, l'ensemble étant réalisé en matière plastique transparente, ou en verre, de manière à résister aux contraintes mécaniques internes ou externes, l'étui 1 possédant dans sa partie interne une protubérance interne surmontée d'un dôme conique (ou plus simplement d'une partie hémisphérique 6 présentant une cavité extérieure 4).

13. Indicateur d'état de conservation selon la revendication 12, le bouchon d'obturation 2 recevant une croix ou croisillon 5 dans sa partie interne ; cette croix ou croisillon 5 étant constitué par des axes en matière plastique colorée ; ceux-ci pouvant être remplacés par un disque en matière plastique coloré qui vient s'encliqueter sous le couvercle ou bouchon 2, le bouchon d'obturation 2 pouvant être moulé de manière à produire un effet de loupe 3 pour un observateur placé au-dessus de l'indicateur.

14. Utilisation de l'indicateur d'état de conservation selon l'une des revendications 12 et 13 consistant à remplir partiellement la cavité interne 7 de l'étui 1 de liquide eutectique coloré d'une solution alcoolique, d'une paraffine, d'une graisse à point de congélation ou de goutte connu, la partie 8 de l'étui 1 pouvant recevoir un gaz neutre ou un autre liquide non miscible avec le liquide 7 dont la superposition sera très visible à travers la paroi de l'étui 1.

15. Utilisation en trois temps de l'indicateur selon l'une des revendications 12 à 14 (figures 2 à 5) 1er temps consistant à armer le dispositif, à retourner l'appareil de manière à le faire reposer sur son couvercle 2 de façon que la matière colorée 7 à l'état liquide vienne submerger et masquer la croix 5 disposé sous la face interne du couvercle 2, à placer l'appareil dans une ambiance de congélation ou de réfrigération afin de solidifier la masse liquide 7, le 2ème temps consistant (figure 3) à retoumer l'appareil, à le faire reposer sur sa base et à le placer en état de veille dans une ambiance de conservation où se trouvent disposés un produit ou groupe de produits de même nature pour lesquels une température est à respecter, l'ambiance de conservation étant respectée, de façon à constater que la croix 5 est emprisonnée et masquée par la masse congelée, le dôme 6 apparaissant dans sa totalité, au cours du 3ème temps (figure 4), le dispositif placé selon la description précédente accusant une modification de la température ambiante de l'enceinte de conservation où il se trouve placé, constatant que la matière 7 s'est liquéfiée et garnit la partie intérieure basse du dispositif ne laissant apparaître que le dôme 6 et la mise en évidence de la croix ou croisillon 5 à l'intérieur du dispositif.

16. Dispositif (figure 6) perfectionné de la revendication 12 représentant un appareil à double effet afin de constituer une plage de température à partir de la décongélation de produits possédant des grades de température "liquidus solidus" différents, constitué d'au moins un étui 1 de forme cylindrique extérieurement en matière plastique transparente ou en verre dont la partie interne revêt une forme hyperbolique dans laquelle on a disposé une cloison étanche 4 dans son axe transversal de façon à obtenir deux compartiments A et B, l'étui 1 recevant un couvercle 2 à sa partie supérieure, le couvercle 2 étant muni dans sa partie interne d'une sphère 3 ou d'un cylindre souple et étanche de faibles dimensions, l'étui 1 recevant un couvercle 6 sur sa base, ce dernier étant muni d'un détrompeur 7 constitué par une pastille magnétique de forme circulaire ou rectangulaire destinée à être positionnée dans une alvéole prévue dans une base support 8 réalisée spécialement pour l'appareil afin de le placer dans l'ambiance à surveiller, la cloison 4 recevant un dispositif témoin 5 fixé sous le couvercle 2, le dispositif étant en outre mis en oeuvre de façon à emprisonner de part et d'autre de la cloison 4 à l'intérieur de l'étui 1 des produits 9 et 10 à l'état liquide dont les températures de figement ou de solidification sont connues, les cavités A et B pouvant recevoir un gaz neutre vis-à-vis des produits liquides 9 et 10, ces mêmes cavités A et B pouvant éventuellement recevoir un liquide non miscible et de densité différente avec respectivement les liquides 9 et 10, les sphères ou cylindres 3 et 5 recevant dans une partie de leur cavité interne des liquides eutectiques dans le but de constituer des accumulateurs de frigories qui seront ajustés de manière à compenser les déperditions de parois de l'étui 1 dans le cas où celles-ci seraient disproportionnées par rapport aux emballages ou de l'enceinte de conservation où sont disposés ces produits.

17. Utilisation en 3 temps (figures 7, 8, 9) du dispositif selon la revendication 16, l'appareil d'abord au repos étant disposé sur sa base 6, les matières 9 et 10 étant à l'état liquide, ce qui correspond à une phase de décongélation faisant apparaître les sphères 11 et 12, le processus de la mise en état de fonctionnement de l'appareil étant obtenu par retournement de l'appareil de 180 °C environ de façon à le faire reposer sur son couvercle, les matières colorées 9 et 10 submergeant les sphères ou cylindres 11 et 12 et les masquant, l'appareil ainsi disposé étant placé dans une ambiance de congélation ou de réfrigération afin de solidifier les masses liquides 9 et 10, l'appareil étant alors prêt à fonctionner et adopter la position de veille, dans une enceinte prédéterminée où l'on désire surveiller l'ambiance de conservation, l'appareil étant alors retourné de 180 °C, c'est-à-dire qu'on le fait reposer sur sa base 6, les sphères ou organes de suspension 11 et 12 étant masqués par les volumes congelés 9 et 10 et le restant ainsi tant que la température ambiante de l'enceinte est respectée.

18. Dispositif (figure 10) perfectionné du dispositif de la revendication 12 ou 16, représentant une forme du dispositif comprenant un boîtier étanche 1 de forme cylindrique en matière plastique transparente ou en verre, muni de son bouchon d'obturation 2, la partie extérieure du boîtier recevant lors de sa conception un film opaque dans lequel on a disposé des fenêtres d'observation 4 et 9, le bouchon d'obturation 2 pouvant être remplacé par un bouchon de cire, dispositif dans lequel on introduit à l'intérieur de cet étui cylindrique au moins deux liquides colorés non miscibles entre eux, de densité et de points de gélification ou de congélation différents et fonctionnant en 3 temps (figures 11, 12, 13), l'appareil étant d'abord placé sur sa base (fond de l'étui) au repos à une température ambiante supérieure au premier point de congélation ou de gélification qui caractérise l'un ou les deux liquides associés communiquant des coloris différents en regard de fenêtres de forme circulaire et de fenêtres de forme rectangulaire, l'armement du dispositif se faisant par retournement du cylindre et en le faisant reposer sur son couvercle ou bouchon dans une enceinte de congélation ou une ambiance de refroidissement suffisante pour solidifier les liquides, amenant des inversions de coloration devant les fenêtres circulaires et les fenêtres rectangulaires, dispositions qui se maintiennent lorsque le système est armé puis retournant à nouveau le cylindre de 180 °C de manière à le disposer sur sa base dans l'enceinte à surveiller.

19. Dispositif/contrôleur de niveau selon la revendication 18, dans lequel pour faciliter le déroulement du cycle d'armement et de mise en veille du dispositif, celui-ci est placé sur un support pourvu d'une crapaudine et d'une bride demi-ouverte prolongée d'un tourillon ensemble qui permet de faire pivoter l'étui de 180 °C.
